# EUROPÄISCHE PATENTSCHRIFT

(11) **EP 1 561 960 B1**
(45) Veröffentlichungstag und Bekanntmachung des Hinweises auf die Patenterteilung: **13.06.2012**
(21) Anmeldenummer: 04101517.3
(22) Anmeldetag: 14.04.2004
(51) Int. Cl.: F16D 1/068, F16D 1/076

(54) **Wellensystem**
Rotor
Rotor

(30) Priorität: 09.02.2004 EP 04100476
(43) Veröffentlichungstag der Anmeldung: 10.08.2005
(73) Patentinhaber: Ford Global Technologies, LLC, A subsidary of Ford Motor Company, Dearborn, MI 48126 (US)
(72) Erfinder: Kluge, Torsten Dr., 51491 Overath (DE)
(74) Vertreter: Drömer, Hans-Carsten

(56) Entgegenhaltungen:
- EP-A- 0 672 335
- DE-A- 3 519 679
- FR-A- 1 244 438
- US-A- 2 879 092
- US-A- 5 168 774
- US-A- 5 676 599
- MAURI P: "I GIUNTI FLANGIATI INCOLLATI" ORGANI DI TRASMISSIONE, TECNICHE NUOVE. MILANO, IT, Bd. 30, Nr. 8, September 1999 (1999-09), Seiten 96-99, XP000860538 ISSN: 0030-4905

## Beschreibung

Die Erfindung betrifft ein System mit einer Welle und einem der Welle zugeordneten Übertragungselement zur Übertragung von Kräften und/oder Momenten.

Derartige Systeme sind im allgemeinen Maschinenbau, insbesondere in der Motorentechnik für Kraftfahrzeuge bekannt. Die Welle ist hierbei beispielsweise als Kurbelwelle oder Steuerwelle ausgestaltet, wobei das Übertragungselement beispielhaft als Steuerantriebskettenrad, bzw. Primärtriebritzel ausgebildet ist. In Reihenmotoren sind die Übertragungselemente, bzw. Kettenräder häufig reibschlüssig mit ihrer Welle verbunden. Die Reibungsmomentenübertragung versagte wegen außerordentlicher Momentenbeanspruchung und/oder Klemmkraftverlusten. In einigen Motoren mit derartigen Ausgestaltungen wurde ein Versagen auch dann beobachtet, wenn Änderungen der Ausgestaltungen durchgeführt wurden, z. B. wenn Zwei-Massenschwungräder eingesetzt wurden, oder auch in Motoren in denen Direkteinspritzung, Turbo- und Hochdruckgradienten mit lediglich drei Zylindern kombiniert wurden.

Steuerantriebskettenräder in üblichen Reihenmotoren sind oft mit einer oder mehreren Bolzenschrauben reibschlüssig mit der Steuerwelle oder einer Kurbelwelle verbunden. Dies erlaubt eine sehr kompakte Ausgestaltung und hat einen Hauptminimierungseinfluß auf das Motoren-Packaging im ganzen, insbesondere auf das Steuerantriebs-Packaging. Der Schraubenbolzen stellt eine bestimmte Klemmkraft an einem üblicherweise runden oder konischen Druckbereich zur Verfügung. Das Moment der Welle wird lediglich aufgrund dieses Reibungsradius zum Kettenrad übertragen.

Als ein Hauptnachteil dieser Momentenübertragung durch Reibungselemente ist das begrenzte Packaging für die Bolzenschraubengröße und des Reibungsradius anzusehen. Lediglich Bolzenschrauben mit einem kompakten Durchmesser und einer reduzierten freien Klemmlänge können hierfür verwendet werden. Dies führt oft zu sehr geringen Klemmkraftreserven, was durch ein teilweises Lösen der Bolzenschrauben während des Betriebes aufgrund der kurzen Klemmlänge verstärkt wird. Die Kontaktzone weist lediglich einen begrenzten Reibradius auf, der zudem die möglichen Klemmkräfte aufgrund der von den Werkstoffen ertragbaren Pressungen limitiert. Außerdem variiert der Reibungskoeffizient in der Kontaktzone in einem weiten Bereich. Insgesamt führt dies auf eine starke Verringerung der durch die Verbindung übertragbaren Momente. Prüfstandsversuche zeigten eine Variation bis zu einem Divisionsfaktor von 2 unter Produktionsbedingungen. Dies bedeutet, daß in Versuchen Verbindungen gefunden wurden, die entsprechend von Spezifikationserfordernissen hergestellt wurden, die aber Feldbedingungen nicht standhalten können.

Der Erfindung liegt die Aufgabe zugrunde, ein System der eingangs genannten Art mit einfachen Mitteln dahin gehend zu verbessern, daß die Verbindung der Welle zum Übertragungselement größeren Beanspruchungen, insbesondere Feldbedingungen standhält.

Erfindungsgemäß wird dies dadurch erreicht, daß das Übertragungselement kraft- und stoffschlüssig mit der Welle verbunden ist.

Der Erfindung liegt die Erkenntnis zugrunde, daß eine alleinige reibschlüssige Verbindung der Welle mit dem Übertragungselement aufgrund von Momentenbelastungen zu einem Durchrutschen der Verbindung führt. Aufgrund der in einem Fahrzeugmotor üblicherweise sehr geringen Bauräume können Reibradien und Schraubendimensionen nur unwesentlich verändert, insbesondere vergrößert werden. Überraschenderweise zeigt sich bei einer Kombination einer kraftschlüssigen mit einer stoffschlüssigen Verbindung bei unverändertem Grunddesign eine zwei- bis dreifache Momentenfestigkeit bezogen auf eine reine Schraubverbindung. Mittels der Kombination einer kraftschlüssigen Verbindung mit einer stoffschlüssigen Verbindung wird eine quasi unlösbare Verbindung zur Verfügung gestellt, die den Betriebsbeanspruchungen, insbesondere unter Feldbedingungen standhält. Vorteilhafterweise ist die Verbindung zu Servicezwecken lösbar. Service arbeiten müssen allerdings äußerst selten, wenn überhaupt durchgeführt werden.

Gattungsgemäße Verbindungen sind in FR-1244438, US-5676599, EP-0672335 und insbesondere DE-3519679 und US-2879092 offenbart.

Zur Sicherstellung dieser hohen Momentenfestigkeit ist es zweckmäßig im Sinne der Erfindung, wenn das Übertragungselement zur kraftschlüssigen Verbindung mit der Welle verschraubt und zur stoffschlüssigen Verbindung mit der Welle verklebt ist.

Hierbei ist es günstig, wenn an der Stelle der Verbindung, an welcher der Kraftschluß realisiert wird, zusätzlich Klebstoff eingebracht wird. Hierdurch stellt sich ein Synergieeffekt ein, der dadurch zum Ausdruck kommt, daß mit dieser dualen, nämlich kraftschlüssigen und stoffschlüssigen Verbindung, ein wesentlich höherer Reibschluß realisiert werden kann als mit jeder einzelnen Verbindungsart für sich.

Günstig im Sinne der Erfindung ist, wenn die Welle einen Wellenabsatz aufweist, an dem das Übertragungselement mit einer Stirnseite anliegt, wobei der Wellenabsatz und das Übertragungselement zur Ausbildung einer kraftschlüssigen Verbindung gegeneinander verspannt sind. Diese Ausführungsform weist in erster Linie aus zwei Gründen Vorteile auf. Zum einen können bei der Ausbildung der Verbindungsfläche mittels Wellenabsatz und der Stirnseite des Übertragungselements relativ große Verbindungsflächen realisiert werden, was bei einem entsprechenden Anpreßdruck zu großen Kräften in der Verbindung führt. Zum anderen weist diese Form der Verbindung einen relativ großen mittleren Reibdurchmesser auf, weshalb größere Drehmomente übertragen werden können.

Zweckmäßig im Sinne der Erfindung ist, wenn der Wellenabsatz und das Übertragungselement mittels mindestens einer Schraube bzw. Mutter gegeneinander verspannt sind. Die Verbindung kann dabei derart erfolgen, daß das Übertragungselement und der Wellenabsatz ähnlich einer Flanschverbindung miteinander verschraubt werden, wobei Schraubenachsen parallel zu einer Achse der Welle verlaufen.

Vorteilhaft ist aber auch im Sinne der Erfindung, wenn die Welle an ihrem freien Ende eine zentrale Bohrung mit Gewinde aufweist, welche zur Aufnahme einer Schraube dient, mit der das Übertragungselement und der Wellenabsatz gegeneinander verspannbar sind. Selbstverständlich kann die Welle an ihrem freien Ende ein Außengewinde aufweisen, welches zur Aufnahme einer Mutter dient, mit der das Übertragungselement und der Wellenabsatz gegeneinander verspannbar sind.

Vorteilhafterweise kommen dabei zudem die Vorteile der erfindungsgemäßen, stoffschlüssigen, insbesondere Klebeverbindung zum Tragen. Die Klebeverbindung kann ohne zusätzliche Werkzeuge eingebracht werden, was sich kostenreduzierend auswirkt. Eine Feinbearbeitung von Kontaktflächen in der Verbindungsstelle von Übertragungselement und Welle - wie sie bei herkömmlichen Verbindungen üblich ist - ist nicht erforderlich, jedoch vorteilhaft. Kleinere Unebenheiten werden durch die Klebstoffschicht selbst ausgeglichen. Eine Nachbearbeitung der eingebrachten Klebeverbindung ist nicht erforderlich.

Weitere vorteilhafte Ausgestaltung der Erfindung sind in den Unteransprüchen und der folgenden Figurenbeschreibung offenbart. Es zeigen:
- Fig. 1: Eine Seitenansicht einer ersten Ausführungsform des Systems im montierten Zustand,
- Fig. 2: eine Seitenansicht einer zweiten Ausführungsform des Systems im montierten Zustand.

Bei den unterschiedlichen Figuren sind gleiche Teile stets mit denselben Bezugszeichen versehen, weswegen diese in der Regel auch nur einmal beschrieben werden.

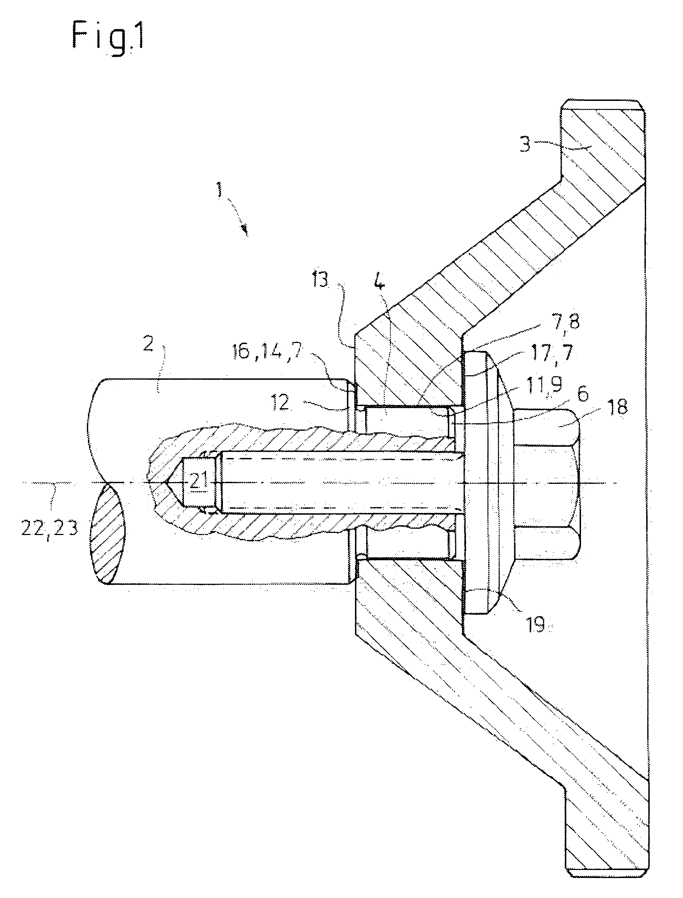

Figur 1 zeigt ein System 1 mit einer Welle 2 und einem der Welle 2 zugeordneten Übertragungselement 3 zur Übertragung von Kräften und/oder Momenten. Das Übertragungselement 2 ist kraft- und stoffschlüssig mit der Welle 2 verbunden. Die Welle 2 ist in dem dargestellten Ausführungsbeispiel eine Steuerwelle oder Kurbelwelle eines Kraftfahrzeugmotors. Das Übertragungselement 3 ist als Steuerantriebskettenrad ausgestaltet. Das Übertragungselement 3 weist eine Bohrung 4 auf und ist auf ein freies Ende 6 der Welle 2 aufgeschoben. Das Übertragungselement 3 und die Welle 2 sind mittels Klebstoff 7 stoffschlüssig miteinander verbunden.

Zur Ausbildung dieser stoffschlüssigen Verbindung ist in einer ersten Kontaktzone 8 des Übertragungselementes 3 zur Welle 2, in der sich eine Innenfläche 9 der Bohrung 4 und eine Außenfläche 11 der Welle 2 gegenüberliegen, eine Tasche in die Innenfläche 9 der Bohrung 4 zur Aufnahme des Klebstoffes 7 eingearbeitet. Die Tasche kann alternativ in die Welle 2 eingearbeitet werden. Die Tasche ist zur Ausbildung der Klebeverbindung aber nicht unbedingt erforderlich. Der in die Tasche eingebrachte Klebstoff 7 verbindet das Übertragungselement 3 mit der Welle 2, indem er sowohl an der Innenfläche 9 der Bohrung 4 als auch an der Außenfläche 11 der Welle 2 anhaftet.

Zur axialen Fixierung des Übertragungselementes 3 weist die Kurbelwelle 2 einen Wellenabsatz 12 auf, gegen den das Übertragungselement mit einer seiner beiden Stirnseiten 13 zur Anlage gebracht wird. Hierdurch wird eine zweite Kontaktzone 14 ausgebildet, in die zusätzlicher Klebstoff zur Erhöhung des Reibschlusses eingebracht wird. Diese zweite Kontaktfläche 14 zeichnet sich durch ihren - im Vergleich zur ersten Kontaktfläche 8 - relativ großen mittleren Reibdurchmesser aus.

Zur Erhöhung des Reibschlusses weist das System 1 eine kraftschlüssige Verbindung in der zweiten Kontaktzone 14 und in einer dritten Kontaktzone 17 auf.

Zur Ausbildung der kraftschlüssigen Verbindung in der zweiten Kontaktzone 14 sind der Wellenabsatz 12 und das Übertragungselement 3 mittels einer Schraube 18 gegeneinander verspannt. Hierzu ist die Welle 2 an ihrem freien Ende 6 mit einer zentralen Bohrung 21 mit Innengewinde versehen, in welche die Schraube 18 eingedreht wird. Mittels der Schraube 18 werden der Wellenabsatz 12 und das Übertragungselement 3 mit seiner dem Wellenabsatz 12 gegenüberliegenden Stirnseite 13 gegeneinander verspannt, so daß in der zweiten Kontaktzone 14 eine kraftschlüssige Verbindung generiert wird. Eine Schraubenachse 22 ist dabei kongruent zu einer Achse 23 der Welle 2.

Durch die der Schraube 18 zugewandten Stirnseite 19 des Übertragungselementes 3 und die Schraube 18 selbst wird die dritte Kontaktzone 17 ausgebildet, die mit der Auflagefläche eines Schraubenkopfes auf der Stirnseite 19 des Übertragungselementes 3 zusammenfällt. In dieser dritten Kontaktzone 17 wird durch die Anziehkraft der Schraube 18 eine zusätzliche kraftschlüssige Verbindung ausgebildet, die der zwischen Wellenabsatz 12 und Übertragungselement 3 ausgebildeten kraftschlüssigen Verbindung ähnlich ist.

In allen drei Kontaktzonen 8, 14, 17 ist Klebstoff 7 eingebracht. Zusätzlich wird die Schraube 18 mittels Klebstoff 7 gesichert. Alternativ kann die Welle 2 an ihrem freien Ende 6 mit einem Außengewinde versehen werden, auf welches eine zentrale Mutter aufgeschraubt wird, so daß das Übertragungselement und der Wellenabsatz 12 gegeneinander verspannt werden. Durch die Kombination der kraftschlüssigen Verbindung mit der stoffschlüssigen Klebverbindung wird eine quasi unlösbare Verbindung zur Verfügung gestellt, die den hohen Beanspruchungen, insbesondere unter Feldbedingungen standhält.

In Figur 3 ist eine weitere Ausführungsform des erfindungsgemäßen Systems im montierten Zustand gezeigt.

Zur Ausbildung der kraftschlüssigen Verbindung 16 sind der Wellenabsatz 12 und das Übertragungselement 3 mittels Schrauben 18 gegeneinander verspannt. Die Ausbildung dieser Preßverbindung erfolgt - anders als bei dem in Figur 1 dargestellten Ausführungsbeispiel - dadurch, daß das Übertragungselement 3 und der Wellenabsatz 12 ähnlich einer Flanschverbindung miteinander verschraubt werden, wobei die Schraubenachsen 22 parallel zur Achse 23 der Welle 2 verlaufen und die dem Wellenabsatz 12 zugewandte Stirnseite 13 des Übertragungselementes 3 unter Druck gegen diesen Wellenabsatz 12 gepreßt wird.

Alternativ kann die Welle 2 an ihrem freien Ende 6 mit einem Außengewinde und die Bohrung 4 mit einem Innengewinde versehen werden, wobei das Übertragungselement 3 in der Art einer Mutter auf die Welle 2 aufgeschraubt wird, so daß das Übertragungselement 3 und der Wellenabsatz 12 gegeneinander verspannt werden.

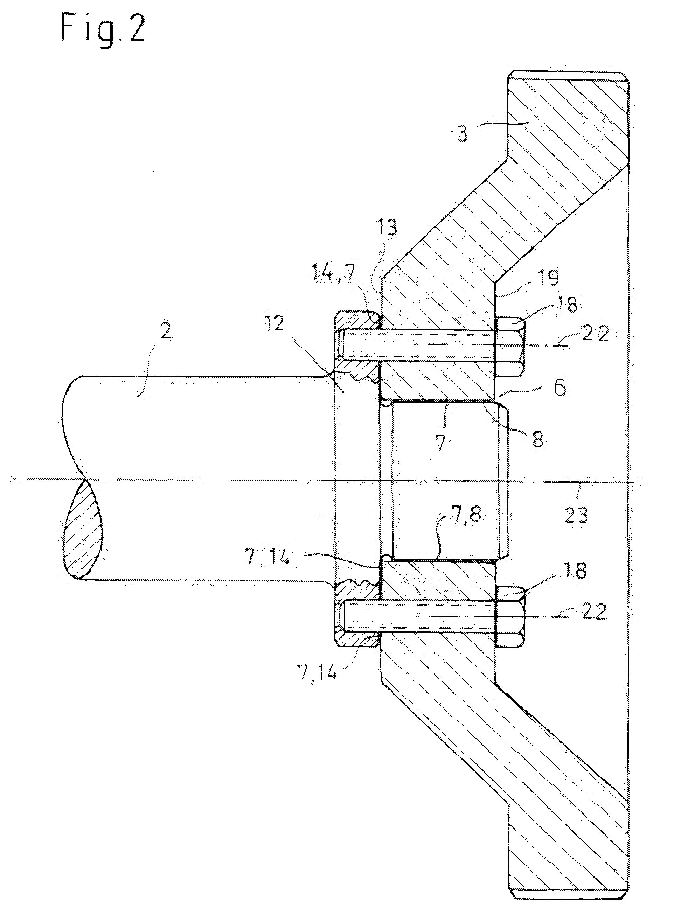

Weiter ist die Erfindung nicht auf Steuerantriebe, wie diese in den bevorzugten Ausführungsbeispielen nach den Figuren 1 und 2 beschrieben wurde, beschränkt. Jede vergleichbare Antriebsverwendung, beispielsweise FEAD Riemenscheiben, Ölpumpen-Antriebskettenräder oder jegliche Antriebsräder mit Reibungsmomentenübertragung sind von der Erfindung umfaßt.

## Patentansprüche

1. System mit einer Welle (2) und einem der Welle (2) zugeordneten Übertragungselement (3) zur Übertragung von Kräften und/oder Momenten, wobei das Übertragungselement (3) eine Bohrung (4) aufweist, und auf ein freies Ende (6) der Welle (2) aufgeschoben ist, und wobei das Übertragungselement (3) kraft- und stoffschlüssig mit der Welle (2) verbunden ist, derart dass das Übertragungselement (3) zur kraftschlüssigen Verbindung mit der Welle (2) verschraubt und zur stoffschlüssigen Verbindung mit der Welle (2) verklebt ist und wobei die stoffschlüssige Verbindung an Reibradien des Übertragungselementes (3) bzw. der Welle (2), die als erste, zweite und dritte Kontaktzone (8, 14, 17) ausgebildet sind, vorgesehen ist,
**dadurch gekennzeichnet, daß** die erste Kontaktzone (8) gebildet ist, in der sich eine Innenfläche (9) der Bohrung (4) und eine Außenfläche (11) der Welle (2) gegenüberliegen, wobei die Welle (2) einen Wellenabsatz (12) aufweist gegen den das Übertragungselement (3) mit einer seiner beiden Stirnseiten (13) anliegt, so dass die zweite Kontaktzone (14) gebildet ist, und wobei durch eine einer Schraube (18) zugewandten Stirnseite (19) des Übertragungselementes (3) und der Schraube (18) selbst die dritte Kontaktzone (17) gebildet ist. Stirnseiten (13) anliegt, so dass die zweite Kontaktzone (14) gebildet ist, und wobei durch eine einer Schraube (18) zugewandten Stirnseite (19) des Übertragungselementes (3) und der Schraube (18) selbst die dritte Kontaktzone (17) gebildet ist.

2. System nach einem der vorhergehenden Ansprüche,
**dadurch gekennzeichnet, daß**
der Wellenabsatz (12) und das Übertragungselement (3) zur Ausbildung einer kraftschlüssigen Verbindung (16) mit mindestens einer Schraube (18) gegeneinander verspannbar sind.

3. System nach einem der Ansprüche 1 bis 4,
**dadurch gekennzeichnet, daß**
die Welle (2) an ihrem freien Ende (19) eine zentrale Bohrung mit Innengewinde aufweist, welche zur Aufnahme einer Schraube (18) dient, mit der das Übertragungselement (3) und der Wellenabsatz (12) gegeneinander verspannbar sind.

4. System nach einem der vorhergehenden Ansprüche,
**dadurch gekennzeichnet, daß**
die Welle (2) an ihrem freien Ende (19) ein Außengewinde zur Aufnahme einer Mutter aufweist, mit der das Übertragungselement (3) und der Wellenabsatz (12) gegeneinander verspannbar sind.

5. System nach einem der vorhergehenden Ansprüche,
**dadurch gekennzeichnet, daß**
die Welle (2) an ihrem freien Ende (19) ein Außengewinde und das Übertragungselement eine Bohrung (4) mit Innengewinde aufweist, wobei das Übertragungselement in der Art einer Mutter auf die Welle (2) aufgeschraubt wird, so daß das Übertragungselement (3) und der Wellenabsatz (12) gegeneinander verspannbar sind.

6. System nach einem der vorhergehenden Ansprüche,
**dadurch gekennzeichnet, daß**
die Welle (2) als Steuerwelle oder Kurbelwelle und das Übertragungselement (3) als Steuerkettenantriebsrad bzw. Primärtriebritzel ausgebildet ist.

## Claims

1. System having a shaft (2) and having a transmission element (3), which is associated with the shaft (2), for transmission of forces and/or moments, with the transmission element (3) having a hole (4) and being shifted onto a free end (6) of the shaft (2), and with the transmission element (3) being connected in a force-fitting and integral manner to the shaft (2), such that the transmission element (3) is screwed to the shaft (2) for force-fitting connection and is adhesively bonded to the shaft (2) for integral connection, and with the integral connection being provided on friction radii of the transmission element (3) and/or of the shaft (2) which are in the form of first, second and third contact zones (8, 14, 17),
**characterized in that**
the first contact zone (8) is formed, in which an inner surface (9) of the hole (4) and an outer surface (11) of the shaft (2) are opposite, with the shaft (2) having a shaft step (12) against which the two end faces (13) of the transmission element (3) rest, such that the second contact zone (14) is formed, and with the third contact zone (17) being formed by an end face (19), which faces a screw (18), of the transmission element (3), and by the screw (18), itself.

2. System according to Claim 1,
**characterized in that**
the shaft step (12) and the transmission element (3) can be braced with respect to one another by means of at least one screw (18) in order to form a force-fitting connection (16).

3. System according to one of Claims 1 to 4,
**characterized in that**
the shaft (2) has a central hole with an internal thread at its free end (19), which hole is used to hold a screw (18) by means of which the transmission element (3) and the shaft step (12) can be braced with respect to one another.

4. System according to one of the preceding claims,
**characterized in that**
the shaft (2) has an external thread for holding a nut at its free end (19), by means of which nut the transmission element (3) and the shaft step (12) can be braced with respect to one another.

5. System according to one of the preceding claims,
**characterized in that**
the shaft (2) has an external thread at its free end (19) and the transmission element has a hole (4) with an internal thread, with the transmission element being screwed to the shaft (2) in the form of a nut such that the transmission element (3) and the shaft step (12) can be braced with respect to one another.

6. System according to one of the preceding claims,
**characterized in that**
the shaft (2) is in the form of a control shaft or crankshaft, and the transmission element (3) is in the form of a control chain drive wheel or primary drive pinion.

## Revendications

1. Système comprenant un arbre (2) et un élément de transfert (3) associé à l'arbre (2) pour transférer des forces et/ou des moments, l'élément de transfert (3) comprenant un alésage (4) et étant enfilé sur une extrémité libre (6) de l'arbre (2), et l'élément de transfert (3) étant connecté à l'arbre (2) par engagement par force et par liaison de matière, de telle sorte que l'élément de transfert (3) soit vissé sur l'arbre (2) pour établir la connexion par engagement par force et soit collé à l'arbre (2) pour établir la connexion par liaison de matière, et la connexion par liaison de matière étant prévue au niveau de rayons de friction de l'élément de transfert (3) ou de l'arbre (2) qui sont réalisés en tant que première, deuxième et troisième zones de contact (8, 14, 17),
**caractérisé en ce que**
la première zone de contact (8) est formée, dans laquelle première zone de contact une surface intérieure (9) de l'alésage (4) et une surface extérieure (11) de l'arbre (2) sont en regard l'une de l'autre, l'arbre (2) comprenant un épaulement d'arbre (12) contre lequel s'applique l'élément de transfert (3) par l'intermédiaire de l'un de ses deux côtés frontaux (13), de telle sorte que la deuxième zone de contact (14) soit formée, et la troisième zone de contact (17) étant formée par un côté frontal (19) de l'élément de transfert (3) qui est tourné vers une vis (18) et par la vis (18) elle-même.

2. Système selon la revendication 1,
**caractérisé en ce que**
l'épaulement d'arbre (12) et l'élément de transfert (3) peuvent être serrés l'un contre l'autre à l'aide d'au moins une vis (18) pour former une connexion par engagement par force (16).

3. Système selon l'une quelconque des revendications 1 à 4,
**caractérisé en ce que**
l'arbre (2) comprend, au niveau de son extrémité libre (19), un alésage central doté d'un filetage intérieur qui sert à la réception d'une vis (18) à l'aide de laquelle l'élément de transfert (3) et l'épaulement d'arbre (12) peuvent être serrés l'un contre l'autre.

4. Système selon l'une quelconque des revendications précédentes,
**caractérisé en ce que**
l'arbre (2) comprend, au niveau de son extrémité libre (19), un filetage extérieur pour la réception d'un écrou à l'aide duquel l'élément de transfert (3) et l'épaulement d'arbre (12) peuvent être serrés l'un contre l'autre.

5. Système selon l'une quelconque des revendications précédentes,
**caractérisé en ce que**
l'arbre (2) comprend, au niveau de son extrémité libre (19), un filetage extérieur et l'élément de transfert comprend un alésage (4) doté d'un filetage intérieur, l'élément de transfert étant vissé sur l'arbre (2) à la manière d'un écrou, de telle sorte que l'élément de transfert (3) et l'épaulement d'arbre (12) puissent être serrés l'un contre l'autre.

6. Système selon l'une quelconque des revendications précédentes,
**caractérisé en ce que**
l'arbre (2) est réalisé sous forme d'arbre de commande ou de vilebrequin et l'élément de transfert (3) est réalisé sous forme de roue d'entraînement de chaîne de commande ou sous forme de pignon d'entraînement primaire.
